# EUROPÄISCHE PATENTSCHRIFT

(11) **EP 3 389 554 B1**
(45) Veröffentlichungstag und Bekanntmachung des Hinweises auf die Patenterteilung: **19.07.2023**
(21) Anmeldenummer: 16823178.5
(22) Anmeldetag: 14.12.2016
(51) Int. Cl.: A61C 13/00, B29C 35/02

(54) **VERFAHREN ZUR HERSTELLUNG GROSSER POLYMERISIERTER DENTALER MATERIALBLÖCKE**
METHOD FOR PRODUCING LARGE POLYMERISED DENTAL MATERIAL BLOCKS
PROCÉDÉ DE FABRICATION DE GRANDS BLOCS DE MATIÈRE DENTAIRES POLYMÉRISÉS

(30) Priorität: 15.12.2015 DE 102015121858
(43) Veröffentlichungstag der Anmeldung: 24.10.2018
(73) Patentinhaber: Kulzer GmbH, 63450 Hanau (DE)
(72) Erfinder: RUPPERT, Klaus, 63477 Maintal (DE); HOHMANN, Alfred, 61389 Schmitten (DE)
(74) Vertreter: Bendele, Tanja
(86) Internationale Anmeldenummer: PCT/EP2016/080875
(87) Internationale Veröffentlichungsnummer: WO 2017/102776

(56) Entgegenhaltungen:
- EP-A1- 2 586 399

## Beschreibung

Gegenstand der Erfindung ist ein Verfahren gemäß Anspruch 1. Bevorzugte Ausführungsformen der Erfindung sind in den abhängigen Ansprüchen definiert.

Aus dem Stand der Technik sind kleine Materialblöckchen mit einer Grundfläche von 1 cm² und etwa einer Länge von 3 bis 4 cm bekannt, die für wenige Sekunden an den beiden Längsseiten gehärtet werden. Alternativ wird eine Lichthärtung im Wasserbad über einen längeren Zeitraum offenbart.

Bei der Herstellung von Komposit-Frässcheiben aus hochgefüllten Kompositen wie z.B. Charisma, Venus Diamond, Signum Ceramis oder Venus Pearl, die lichthärtend sind, ist zu erwarten, dass es bei einer reinen Heißhärtung aufgrund von Spannungen im Material oft zu Rissen und Sprüngen kommt, insbesondere, wenn Blöcke einer gewissen Größe hergestellt werden. Eine Lichthärtung kommt aufgrund der grossen Schichtstärke des Fräsrohlings und der ungenügenden Aushärtetiefe des lichthärtenden Komposits nicht in Betracht.

EP 2 586 399 A1 beschreibt ein Verfahren zur Herstellung eines dreidimensionalen dentalen Materialblocks aus einem dentalen, polymerisierbaren Material, bei dem der dreidimensionale dentale Materialblock zunächst vollständig fotopolymerisiert wird, und bei dem der fotopolymerisierte dentale Materialblock dann durch eine Hitzebehandlung nachbehandelt wird.

Aufgabe der Erfindung war es, ein Verfahren zu entwickeln, das die Herstellung von dentalen Materialblöcken bzw. Materialplatten einer gewissen Dimension erlaubt, die in eine Vielzahl kleiner Materialblöcke zerteilt oder geschnitten werden können, aus denen dentale Prothesen oder Teile davon mittels eines materialabtragenden Verfahrens hergestellt werden können. Ebenso sollte ein Verfahren entwickelt werden, mit dem im Wesentlichen spannungsfreie dentale Materialblöcke hergestellt werden können, die vorzugsweise frei von spannungsinduzierten Defekten, wie Rissen sind. Des Weiteren sollte ein Verfahren zur Herstellung von dentalen prothetischen Komposit-Fräsrohlingen, insbesondere mit einem Füllstoffgehalt von 50 bis 95 Gew.-%, entwickelt werden, bei dem spannungsinduzierte Defekte wie z.B. Lunker, Risse und Sprünge im Fräsblock während des Herstellungsprozesses nicht auftreten.

Gelöst wurden die Aufgaben mit einem Verfahren nach Anspruch 1 sowie mit den nach dem Verfahren erhältlichen dentalen Materialblöcken nach Anspruch 11.

Gegenstand der Erfindung folglich ist ein Verfahren nach Anspruch 1 sowie ein durch ein solches Verfahren erhältlicher dentaler Materialblock nach Anspruch 11. Bevorzugte Ausführungsformen der Erfindung sind in den abhängigen Ansprüchen definiert.

Die Aufgaben wurden erfindungsgemäss gelöst, indem ein polymerisierbares dentales Material, wie vorzugsweise ein dentales Komposit, in eine bei der Wellenlänge des/der Photoinitiators/Photoinitiatoren lichtdurchlässige Giess- oder Pressform gegeben wird und dort in einem kombinierten Verfahren aus spezifischer lichtinduzierter Polymerisation und einer definierten thermischen Polymerisation gehärtet wird. Dabei ist es von Vorteil, wenn das dentale Material, wie beispielsweise ein Komposit vor dem Einfüllen in die Giess- oder Pressform auf eine Temperatur aufgewärmt wird, bei der die Viskosität des Materials deutlich vermindert ist. Durch diese Massnahme kann das dentale Material besser in die Giess- oder Pressform einfliessen, sowie die Form vollständiger ausfüllen. Die gewählte Temperatur muss unter der Temperatur, bei der die thermisch induzierte Polymerisation startet, liegen. Daher ist die wählbare Temperatur zur Einstellung der Viskosität abhängig vom verwendeten thermischen Polymerisationsstarter. Bei der Verwendung von z.B. Dibenzoylperoxid kann das dentale Material bei ca. maximal 60 - 65 °C über einen Zeitraum von max. 2 Stunden verarbeitet werden.

Nach dem Einfliessen in die transparente dreidimensionale Giess- oder Pressform, insbesondere die in die Hohlform der Giess- oder Pressform, erfolgt ein Planarisieren bzw. Glätten der Oberfläche durch vorsichtiges Pressen der Oberfläche mit einem planaren Stempel, so dass das Material eine definierte dreidimensionale Geometrie erhält. Anschließend kann das polymerisierbare Material in der transparenten Giess- oder Pressform für 6 Min. von allen Seiten mit einer geeigneten Lichtquelle, wie einer Laborlichtlampe, vorzugsweise in einem Lichtofen wie z.B. Eggerlichtofen bestrahlt werden. Durch die Bestrahlung mit UV/Vis-Licht wird das Material oberflächlich polymerisiert bzw. angehärtet. Die Lichthärtung entspricht einem Vorhärte-Prozess in dem sich eine äussere polymerisierte geschlossene Hülle im dentalen Material ausbildet. Die polymerisierte, gehärtete Hülle des dentalen Materials weist eine Dicke an polymerisiertem Material von etwa 3 bis 5 mm auf. Der Kern des dentalen Materials ist jedoch noch weich. Anschliessend wird das dentale Material mit geschlossener äusseren Hülle vorzugweise aus der Form entnommen. In einem nächsten Schritt wird das dentale Material, insbesondere das Komposit-Material, für etwa 8 Stunden in einem Ofen, wie einem Trockenschrank bei ca. 90 °C thermisch polymerisiert, um die thermische Aushärtung und damit die Durchhärtung des Fräsblocks abzuschliessen. Der erhältliche Materialblock ist vorzugsweise vollständig polymerisiert.

Gegenstand der Erfindung ist ein Verfahren zur Herstellung eines dreidimensionalen dentalen Materialblocks gemäß Anspruch 1.

Dabei kann das dentale Material vorzugsweise 0,01 bis 2 Gew.-% an Initiatoren umfassend Photoinitiatoren und mindestens einen thermisch aktivierbaren Radikalstarter enthalten, wie mindestens ein Peroxid.

In Schritt b) erfolgt das Überführen des polymerisierbaren dentalen Materials vorzugsweise in eine strahlendurchlässige dreidimensionale Giess- oder Pressform, wobei die Giess- oder Pressform vorzugsweise mindestens eine erste Kantenlänge oder einen Durchmesser von größer gleich 90 mm und mindestens eine zweite und/oder dritte Kantenlänge von größer gleich 20 mm der Form zur Herstellung des Materialblocks aufweist, bevorzugt sind Formen von mindestens 148 x 210 mm, vorzugsweise von mindestens 210 x 297 mm und zur Herstellung einer Materialdicke/-höhe von mindestens 20 mm, vorzugsweise 30 mm, 90 bis 200 mm.

Im Schritt e) kann die Lichtquelle und/oder die Giess- oder Pressform rotieren, um ein gleichmässiges Bestrahlen von allen Seiten der Form zu ermöglichen. Die Bestrahlung in Schritt e) kann vorzugsweise ohne separate Kühlung in einem Medium, wie Wasser, erfolgen. Bestrahlt wird vorzugsweise von allen Seiten gleichzeitig für mindestens 5 Minuten bis 60 Minuten, vorzugsweise wird gleichzeitig von allen Seiten für 5 bis 15 Minuten bestrahlt. Durch die erfindungsgemässe Vorbehandlung kann ein rissfreies Belichten ohne gleichzeitige Kühlung erfolgen. Die in Schritt e) erhaltene Hülle weist in der Regel eine Wandstärke von 3 bis 5 mm auf, so dass nach der Bestrahlung im Schritt e) die Hülle in der definierten dreidimensionalen Geometrie des Materials vorliegt, während der innere Bereich des Materials nicht polymerisiert oder teilweise polymerisiert ist. In Schritt e) wird vorzugsweise ein formstabiles dentales Material mit Hülle in definierter dreidimensionaler Geometrie erhalten.

Die erfindungsgemässen Materialblöcke sollen einerseits gut schneidbar sein sowie auch zur Herstellung dentaler prothetischer Teile in einem materialabtragenden Verfahren geeignet sein, wie einem Fräsverfahren und/oder Schleifen, Bohren, einer Materialabtragung mittels Laserenergie, wie Laser Milling, mittels Abplatzen des Materials, und/oder CAD/CAM fräsen und/oder einem Verfahren umfassend verschiedene materialabtragende Verfahrensschritte. Dabei ist es besonders bevorzugt, wenn die materialabtragenden Verfahren CAD/CAM-Verfahren sind, in denen die materialabtragende Bearbeitung automatisiert erfolgt.

Um die Materialblöcke vor der Polymerisation in eine optimale Geometrie zu überführen hat es sich als vorteilhaft herausgestellt, das in die einseitig offene Giess- oder Pressform überführte polymerisierbare Material auf der offenen, insbesondere oberen Seite zu planarisieren. Daher erfolgt vorzugsweise im Schritt c) das Planarisieren, indem eine Folie oder eine planare Scheibe, die beide vorzugsweise transparent sind, auf das zu polymerisierende Material in der einseitig offenen dreidimensionalen Giess- oder Pressform aufgebracht werden. Die Folie oder die Scheibe werden anschließend mit einem Stempel unter Druck zur Planarisierung der Oberfläche beaufschlagt. Der Stempel mit dem die Planarisierung erfolgt wird vorzugsweise mit einem Druck von mindestens 1 bar auf das Material gepresst, bevorzugt unter einem Druck von 1,2 bis 5 bar, weiter bevorzugt erfolgt die Planarisierung mittels eines Stempel bei einem Druck von 2 bis 5 bar. Der Stempel weist dazu vorzugsweise eine an die Giess- oder Pressform angepasste Geometrie mit planarer Unterseite auf.

Zur Homogenisierung des dentalen polymerisierbaren Materials vor der lichtinduzierten Polymerisation wird das Material mit einem Gas oder Gasgemisch unter Druck beaufschlagt. Dementsprechend ist es bevorzugt, wenn im Schritt d) das polymerisierbare Material in der dreidimensionalen Giess- oder Pressform mit einem Druck, insbesondere eines Gases oder Gasgemisches, von 1,5 bis 5 bar beaufschlagt wird, bevorzugt ist ein Druck von 2 bis 5 bar, besonders bevorzugt von 2 bis 3 bar. Das polymerisierbare Material wird mit einem Gas oder Gasgemisch unter erhöhtem Druck behandelt, um vorhandene gasförmige Mikroeinschlüsse, bspw. aus Luft oder Gas, im Material zu minimieren oder zu beseitigen. Bevorzugte Gase oder Gasgemische zur Behandlung des Materials unter Druck umfassen Luft, Helium und Argon, wobei Luft besonders bevorzugt ist.

Entsprechend einer besonders bevorzugten Ausführungsform der Erfindung erfolgt die Bestrahlung des polymerisierbaren dentalen Materials im Wesentlichen von allen Seiten mit Licht im UV/Vis-Bereich im Bereich von ca. 380 nm - 500 nm, vorzugsweise als duale Bestrahlung im UV- und im Vis-Bereich, vorzugsweise erfolgt die Bestrahlung gleichzeitig von allen Seiten der dreidimensionalen Geometrie, für einen Zeitraum größer gleich 4 Minuten bis 4 Stunden, insbesondere größer gleich 5 Minuten, bevorzugt sind 5,5 Minuten bis 15 Minuten.

Gleichfalls Gegenstand der Erfindung ist ein Verfahren, in dem die Bestrahlung des polymerisierbaren dentalen Materials als duale Bestrahlung erfolgt und die mindestens zwei Intensitätsmaxima des Lichts der Strahlungsquelle(n) im UV- und im Vis-Bereich liegen, insbesondere erfolgt eine Bestrahlung mit Intensitätsmaxima der Strahlungsquelle(n) von 350 nm bis 390 nm und von 420 nm bis 500 nm, besonders bevorzugt mit Intensitätsmaxima um 380 nm und 450 nm, vorzugsweise +/- 20 nm. Um eine qualitativ besonders gute und gleichmässige Polymerisation der äusseren Hülle zu erhalten, ist die duale Bestrahlung besonders geeignet. Dabei ist es weiter besonders bevorzugt, wenn die Bestrahlung in einem Lichtofen, insbesondere in einem innen verspiegelten Lichtofen, besonders bevorzugt in einem Lichtofen in dem zwei bis 20 Strahlungsquellen, vorzugsweise 4 bis 15 Strahlungsquellen, mit mindestens zwei Intensitätsmaxima der Strahlungsquelle(n) von 350 nm bis 390 nm und von 420 nm bis 500 nm erfolgt, besonders bevorzugt mit Intensitätsmaxima um 380 nm und 450 nm. Besonders geeignete Strahlungsquellen in einem innen verspiegelten Lichtofen sind: 2 -20 Strahlungsquellen mit je 9W (450 nm) sowie 2 bis 20 Strahlungsquellen mit je 9W (380 nm).

Durch die Bestrahlung im Schritt e) wird eine vorzugsweise äussere, geschlossene Hülle des polymerisierten Materials in der dreidimensionalen Geometrie des dentalen Materials gebildet. Das dentale Material mit Hülle ist vorzugsweise formstabil und weist eine definierte dreidimensionale Geometrie auf, die etwa der Giess- oder Pressform entspricht. Die Hülle hat vorzugsweise eine Dicke von grösser gleich 2 bis 15 mm, bevorzugt weist die Hülle eine Dicke an polymerisiertem Material von grösser gleich 2 bis 10 mm auf, besonders bevorzugt von 3 bis 6 mm, weiter bevorzugt von 3 bis 4 mm.

In einem Verfahrensschritt, bspw. f), wird vorzugsweise das dentale Material mit formstabiler Hülle und mit definierter dreidimensionaler Geometrie aus der Giess- oder Pressform entnommen. Nach einer Alternative kann die nachfolgende thermische Behandlung auch in der Giess- oder Pressform erfolgen.

In einem Verfahrensschritt, bspw. j), wird der in i) erhaltene dentale, polymerisierte Materialblock mit definierter dreidimensionaler Geometrie in grösser gleich 50 Fräsblöcke, die jeweils mindestens eine Kantenlänge von grösser gleich 10 mm aufweisen, insbesondere bis kleiner gleich 25 mm, bevorzugt bis kleiner gleich 20 mm, zerteilt. Bevorzugt sind zwei bis drei Kantenlängen der quaderförmigen Fräsblöcke grösser gleich 10 mm. Das Zerteilen kann erfolgen durch Scheiden, Laserschneiden, Sägen oder andere dem Fachmann bekannten Massnahmen. Dabei ist es besonders bevorzugt, wenn der Materialblock in grösser gleich 90 Fräsblöcke, bevorzugt grösser gleich 160 Fräsblöcke mit jeweils mindestens einer Kantenlänge von grösser gleich 10 mm, und insbesondere kleiner gleich 20 mm, vorzugsweise kleiner gleich 25 mm, zerteilt wird. Die Fräsblöcke liegen vorzugsweise in Form von Quadern vor. Bevorzugt sind alle Kantenlängen der Quader grösser gleich 10 mm, insbesondere grösser gleich 12 mm, und kleiner gleich 25 mm. So können Fräsblöcke in Form von Quadern mit einer Fläche von 14 x 14 mm, oder von 15x15 mm sowie einer Höhe von 17 bis 18 mm hergestellt werden.

Im Verfahrensschritt g) wird das Material aus Schritt e) mit fester Hülle und definierter dreidimensionaler Geometrie auf 60 °C bis 150 °C für mindestens 90 Minuten erhitzt. Die thermische Polymerisation wird vorzugsweise im Temperaturbereich von 70 °C bis 100 °C durchgeführt, bevorzugt von 70 bis 95 °C, besonders bevorzugt von 80 °C bis 95 °C, weiter bevorzugt von 85 bis 95 °C, bevorzugt um 90 °C +/- 2,5 °C. Die thermische Polymerisation wird in dem vorgenannten Temperaturbereich für größer gleich 2 Stunden, vorzugsweise von 2 bis 12 Stunden durchgeführt. Insbesondere auf 70 °C bis 95 °C für 2 bis 12 Stunden. Um besonders spannungsfreie Materialblöcke, insbesondere Materialblöcke mit einer Kantenlänge von größer gleich 90 mm und mindestens einer zweiten Kantenlänge von grösser gleich 20 mm herzustellen, hat sich eine thermische Behandlung von 80 bis 95 °C für 5 bis 12 Stunden herausgestellt, insbesondere über 7 bis 9 Stunden, vorzugsweise um 8 Stunden bei 90 °C +/- 2,5 °C. Nach einer besonders bevorzugten Alternative wird im Schritt g) auf 70 °C bis 95 °C für 2 bis 12 Stunden erhitzt, insbesondere wird das dentale Material in Schritt g) in einem Ofen erhitzt.

Im Anschluss an den thermischen Polymerisationsschritt kann in Schritt h) das Material im Ofen über eine definierte Zeit abkühlen. Dabei ist es zur Herstellung von besonders spannungsfreien Materialblöcken bevorzugt, wenn die Abkühlung im Ofen erfolgt, der nach Durchführung des Schrittes g) abgeschaltet wird. Vorzugsweise wird der Ofen ausgeschaltet und das Material kann langsam im Ofen abkühlen.

Der erfindungsgemäße Materialblock weist vorzugsweise eine Biegefestigkeit von größer gleich 140 MPa, vorzugsweise größer gleich 145 MPa auf, und zugleich ein E-Modul von größer gleich 10.000 MPa, vorzugsweise größer gleich 10.500 MPa, bevorzugt größer gleich 11.000 MPA.

Die optionale Einstellung der Viskosität vor der Überführung des dentalen polymerisierbaren Materials in die Giess- oder Pressform kann durch Erwärmen des Materials auf 60 bis 65 °C erfolgen. Die optionale Einstellung der Viskosität kann durch Erwärmen des Materials auf 60 bis 65 °C erfolgen, insbesondere durch Erwärmen des polymerisierbaren Materials auf eine Temperatur im Bereich von 35 °C bis etwa 10 °C unterhalb der Zerfallstemperatur von thermischen Radiakalstartern.

In jedem Fall soll die Temperatur zur Einstellung der Viskosität jedoch unterhalb der Temperatur, bei der die thermisch induzierte Polymerisation gestartet wird, liegen. Bevorzugt liegt die Temperatur mindestens 10 °C unter der Temperatur bei der die thermisch induzierte Polymerisation startet.

Das dentale Material kann vorzugsweise die folgende Viskosität aufweisen oder auf eine folgende Viskosität eingestellt werden mit *η von 1* • 10² Pa·s bis 5,0 • 10⁵ Pa·s, insbesondere von 8 • 10² Pa·s bis 4,5 • 10⁵ Pa·s. Der Speichermodul des polymerisierbaren Materials kann dabei zwischen G* = 2 • 10³ bis 5 • 10⁶ liegen. Alternativ bevorzugt ist eine Viskosität von 1 • 10⁵ Pa·s bis 5,0 • 10⁸ Pa·s, bevorzugt ist eine Viskosität vonf *η von 5* • 10⁵ Pa·s bis 2,0 • 10⁸ Pa·s, besonders bevorzugt von *η* von 8 • 10⁵ Pa·s bis 2,0 • 10⁸ Pa·s. Der Speichermodul des polymerisierbaren Materials kann dabei zwischen G* = 2 • 10³ bis 10 • 10⁵ liegen. Die Viskosität wird über eine Ozillationsmessung bestimmt. Gemessen wird der Amplitudensweep (Gerät: Anton Paar NCR301).

Zur Herstellung der erfindungsgemässen Materialblöcke werden vorzugsweise Giess- oder Pressformen, insbesondere mit einer Hohlform, aus PMMA (Polymethylmethacrylat) oder Polycarbonat (PC) verwendet. Die Formen können dazu zylindrische, oben einseitig offene PMMA Gies- oder Pressformen, insbesondere mit Hohlform, mit einem PMMA Boden sein, bspw. in Form von zylindrischen Schalen aus PMMA. Ebenso können die Formen rechteckige oder quadratische Abmessungen in der Draufsicht haben. Geeignet sind bspw. Giess- oder Pressformen mit mindestens einer Hohlform, die in Form eines Quaders vorliegen, bei dem zwei Flächen grösser gleich DIN A5 sind, insbesondere grösser gleich DIN A4 sind, und die verbleibende Kantenlänge mindestens 20 mm beträgt, vorzugsweise grösser gleich 30 mm, grösser gleich 40 mm, 50 mm, grösser gleich 60 mm. Gleichfalls möglich ist die Herstellung von Quadern in denen mindestens vier Flächen grösser gleich DIN A5, insbesondere grösser gleich DIN A4, sind. Ebenfalls geeignete Geometrien für die Hohlform in Giess- oder Pressformen sind zylindrische, stabförmige oder würfelförmige Geometrien. Alternativ kann die Giess- oder Pressform aus einem anderen transparenten Material wie Polycarbonat hergestellt sein.

Die Hohlform kann dabei vorzugsweise der dreidimensionalen definierten Geometrie der Hülle mit definierter dreidimensionaler Geometrie des Materials, bevorzugt der Geometrie des dentalen, polymerisierten Materialblocks mit definierter dreidimensionaler Geometrie entsprechen. Dabei ist es besonders bevorzugt, wenn der Materialblock mit definierter dreidimensionaler Geometrie einen Volumenschrumpf von kleiner gleich 1-3 Vol-% in Bezug zu mindestens einer Kantenlänge der Hohlform aufweist.

Besonders bevorzugt wird das Verfahren mit Giess- oder Pressformen mit einer Transparenz von grösser 95 % durchgeführt wird, insbesondere aus PMMA oder Polycarbonat oder auch Glas, wie Quarzglas oder handelsüblichem Glas. Nach einer besonders bevorzugten Alternative wird das erfindungsgemässe Verfahren mit Giess- oder Pressformen durchgeführt, deren Material einen Brechungsindex von 1,3 bis 1,8 aufweist, insbesondere von 1,48 bis 1,50.

Eine alternative Giess- oder Pressform kann eine innere Giess- oder Pressform aus PMMA oder Polycarbonat oder auch Glas, wie Quarzglas oder handelsüblichem Glas umfassen, die außen durch ein Gerüst mit Durchbrechungen stabilisiert werden kann. Das Gerüst kann aus einem Metall oder einer Legierung bestehen.

Die Wandstärke der im Verfahren verwendeten Giess- oder Pressformen sollte vorzugsweise im Bereich von 5 bis 30 mm liegen, bevorzugt von 5 bis 10 mm. Die Bestrahlung erfolgt vorzugsweise direkt in der PMMA oder Polycarbonat Giess- oder Pressform, insbesondere ohne die Verwendung eines Wasserbades, ohne Wasserkühlung der Giess- oder Pressform oder eines sonstigen kühlenden, die Giess- oder Pressform umgebenden Mediums.

Nach dem erfindungsgemässen Verfahren können Materialblöcke mit definierter dreidimensionaler Geometrie hergestellt werden bzw. sind erhältlich, die im Wesentlichen keine gasförmigen Mikroeinschlüsse oder Lunker aufweisen die größer sind als 0,05 mm, vorzugsweise sind die Lunker oder gasförmigen Mikroeinschlüsse kleiner gleich 100 µm, besonders bevorzugt kleiner gleich 50 µm, weiter bevorzugt kleiner gleich 20 µm.

Die nach dem erfindungsgemässen Verfahren hergestellten oder erhältlichen polymerisierten Materialblöcke mit definierter dreidimensionaler Geometrie weisen vorzugsweise mindestens eine erste Kantenlänge oder einen Durchmesser von größer gleich 90 mm auf und haben vorzugsweise mindestens eine zweite Kantenlänge von größer gleich 20 mm, insbesondere grösser gleich 90 mm bis 200 mm. Insbesondere können Quader erhalten werden in denen zwei Flächen grösser gleich DIN A 5 (21 cm x 14,8 cm) oder grösser gleich DIN A4 (21 cm x 29,7 cm) sind und die verbleibenden Kantenlängen grösser gleich 20 mm, vorzugsweise grösser 30 mm, bevorzugt grösser 40 bis 60 mm betragen.

In dem erfindungsgemässen Verfahren kann als dentales polymerisierbares Material ein Kompositmaterial eingesetzt werden, welches umfasst
(i) 50 bis 95 Gew.-% anorganische Füllstoffe, die umfassen a) Siliciumdioxid, vorzugsweise Kieselsäure; Zirkondioxid und/oder Gemische umfassend mindestens die beiden vorgenannten Oxide, und b) dentale Gläser deren mittlere Partikelgrößen im Bereich von 0,2 bis 10 µm liegen,
(ii) 5 bis 50 Gew.-% Monomermischung,
(iii) 0 bis 2 Gew.-% Initiatoren umfassend Photoinitiatoren, mindestens ein thermisch aktivierbarer Radikalstarter, insbesondere 0,01 bis 1 Gew.-%, wie Peroxide,
(iv) 0 bis 2 Gew.-% Stabilisatoren, Additive, wobei die Gesamtzusammensetzung 100 Gew.-% beträgt.

Nach einer bevorzugten Alternative können die dentalen Gläser mit mindestens zwei verschiedenen Fraktionen an mittleren Partikelgrößen im Bereich von 0,2 bis 10 µm vorliegen.

Gleichfalls Gegenstand der Erfindung ist ein dentaler Materialblock gemäß den Ansprüchen 11-13. Offenbart ist weiterhin ein dentaler Materialblock der keine Lunker Risse oder Hohlräume aufweist, die in einer Dimension eine Ausdehnung von grösser gleich 0,05 mm sind, vorzugsweise sind sie kleiner gleich 100 µm, besonders bevorzugt kleiner gleich 50 µm, weiter bevorzugt kleiner gleich 20 µm. Ebenfalls Gegenstand der Erfindung ist ein Materialblock der mindestens eine erste Kantenlänge oder einen Durchmesser von größer gleich 90 mm aufweist und mindestens eine zweite Kantenlänge von größer gleich 20 mm aufweist. Bevorzugt sind Materialblöcke mit 148 × 210 mm, vorzugsweise von 210 × 297 mm und einer Materialdicke/-höhe von mindestens 20 mm, vorzugsweise 30 mm, 90 bis 200 mm.

Der polymerisierte Materialblock ist ferner dadurch gekennzeichnet, dass er im Wesentlichen die gleiche definierte Geometrie aufweist wie das polymerisierbare dentale Material in der Giess- oder Pressform, insbesondere in Schritt c), d) und/oder e), insbesondere in Schritt c) oder d). Somit weist der polymerisierte Materialblock vorzugsweise annähernd die gleiche Geometrie wie die Vertiefung der Giess- oder Pressform, wobei die Höhe des Materialblocks an der Seite an der die Planarisierung erfolgte variieren kann.

Durch die lange, vorzugsweise für mindestens 4 Minuten gleichzeitig von allen Seiten, erfindungsgemässe Lichthärtung erhält das polymerisierbare Dentalmaterial eine feste äussere formstabile Hülle, die bereits in der definierten dreidimensionalen Geometrie des Materials vorliegt. Daher kann das Dentalmaterial mit der festen Hülle erfindungsgemäss aus der Giess- und/oder Pressform entnommen werden und anschliessend im Ofen thermisch behandelt werden.

Vorzugsweise weist der polymerisierte Materialblock in Relation zum polymerisierbaren dentalen Material in der definierten Geometrie im Schritt c) oder d) einen Schrumpf von kleiner 1-3 Vol-% in Bezug auf die erste Kantenlänge oder einen Durchmesser von 90 mm auf. Ebenfalls bevorzugt ist ein Schrumpf von kleiner gleich 1-3 Vol-% in Bezug auf die zweite Kantenlänge von größer gleich 20 mm.

Ebenfalls Gegenstand der Erfindung ist die Verwendung eines polymerisierten Materialblocks gemäß Anspruch 14. Offenbart ist weiterhin die Verwendung eines polymerisierten Materialblocks der mindestens eine Kantenlänge oder einen Durchmesser von grösser gleich 90 mm und mindestens eine zweite Kantenlänge von grösser gleich 20 mm aufweist zur Herstellung von mindestens zwei kleineren Materialblöcken, insbesondere indem der Materialblock mindestens einmal zerteilt, vorzugsweise zerschnitten, gesägt oder durch andere dem Fachmann bekannte Massnahmen zerteilt wird. Entsprechend dem Verfahren der Erfindung können DIN A5 oder auch DIN A4 grosse Platten mit einer Dicke von 10 bis 50 mm, vorzugsweise von 20 bis 50 mm hergestellt werden, die dann bspw. zu Fräsblöcken in Form von Quadern einer Fläche 14 × 14 mm, oder 15×15 mm sowie einer Höhe von 17 bis 18 mm geteilt werden können. So können aus einer DIN A4 grossen Platte über 200 kleinere Materialblöcke zur Verwendung als Fräsblock hergestellt, bspw. über 200 kleinere Materialblöckchen bzw. Fräsblöcke geschnitten werden.

Die erfindungsgemäss hergestellten Materialblöcke oder die aus ihnen herstellbaren Materialblöckchen können anschließend in einem abtragenden Verfahren zu dentalen prothetischen Teilen oder Teilen davon bearbeitet werden, insbesondere können Kompositblöcke hergestellt werden und in einem CAD/CAM-Verfahren fräsend, bohrend und/oder mittels eines Lasers in einem abtragenden Verfahrens, wie Laser Milling, bearbeitet werden.

Ausführungsbeispiele erläutern die Erfindung näher ohne die Erfindung auf diese Gegenstände zu beschränken.
Figur 1: Eine erfindungsgemässe lichtdurchlässige PMMA-Giess- oder Pressform.
Figur 2: PMMA-Form gefüllt mit polymerisierbarem dentalen Material.
Figur 3: Planarisieren der Oberfläche des Materials
Figur 4: Allseitige Lichthärtung unter Ausbildung der Hülle im polymerisierbaren Material.
Figur 5: Polymerisierter Materialblock.
Figur 6: Aus dem Materialblock gefräste Brücke
Figuren 7a, 7b und 7c: Nicht erfindungsgemässe Materialblöcke des gleichen Materials das rein thermisch gehärtete wurde.
Figur 8: Darstellung eines geschnittenen erfindungsgemässen Materialblocks mit verschiedenen Vergrößerungen der Schnittfläche.

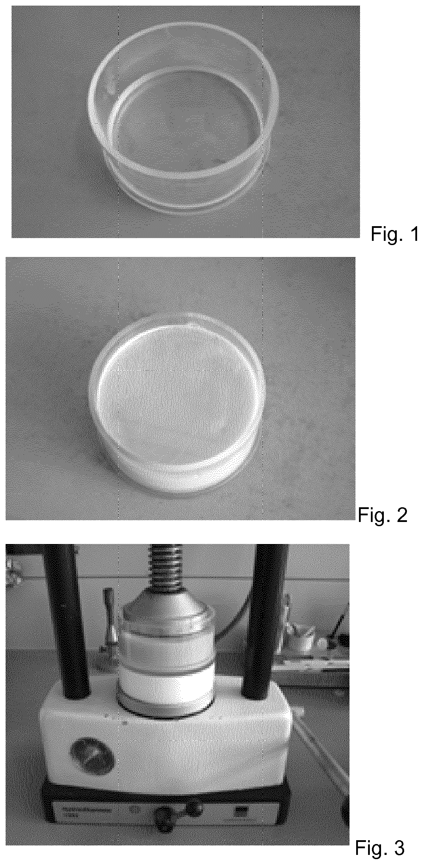

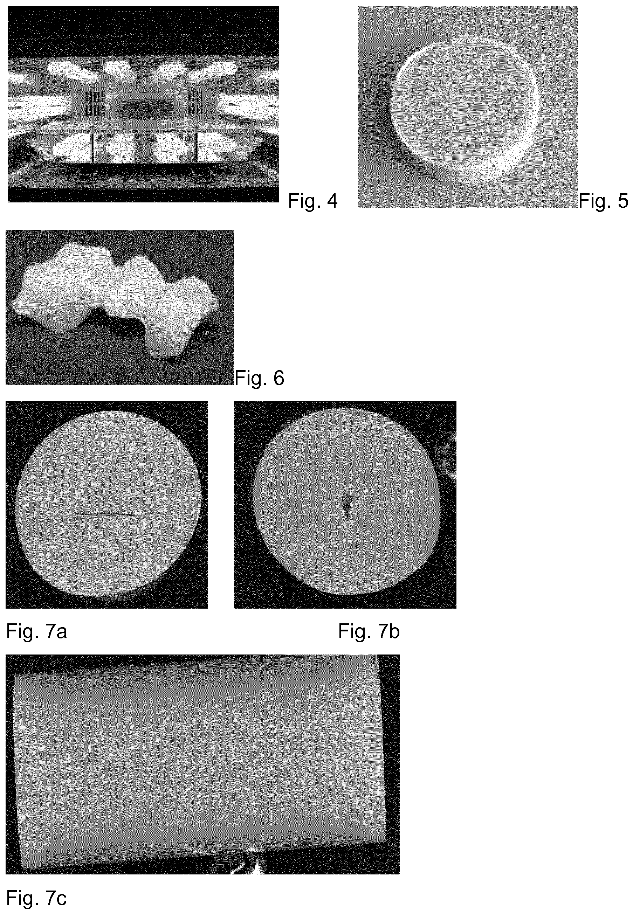

Figur 1 zeigt eine PMMA Giess- oder Pressform, die oben einseitig offen ist, um das polymerisierbare dentale Material einfliessen oder als knetbare Paste einführen zu können. In Figur 2 ist die PMMA Form gefüllt mit einem polymerisierbaren dentalen Material dargestellt. In der Figur 3 wird das dentale Material in der PMMA-Form mit einem Stempel auf der Oberseite planarisiert, indem der Stempel mit einem definierten Druck auf die Oberfläche des polymerisierbaren Materials aufgedrückt wird. Vorzugsweise befindet sich zwischen dem Stempel und der Oberfläche des polymerisierbaren Materials eine transparente Folie oder eine transparente planare Scheibe, vorzugsweise aus PMMA. Anschließend wird das Material in einem Druckbehälter mit einem Gas oder Gasgemisch beaufschlagt, um gasförmige Mikroeinschlüsse zu beseitigen. Die allseitige Lichthärtung ist in Figur 4 dargestellt. Nach der Lichthärtung erfolgt die erfindungsgemässe thermische Polymerisation bei 90 °C für 8 Stunden. Der erhaltene polymerisierte Materialblock ist in Figur 5 und in Figur 6 dargestellt.

Figur 7a, 7b und 7c: nicht erfindungsgemässe Materialblöcke des gleichen Materials das gehärtet wurde, indem das Material für 8 h bei 90 °C getempert wurde. Das gehärtete Material weist grosse Risse oder Lunker einer Grösse über 0,5 cm auf. Insgesamt fällt zudem auf, dass die polymerisierten Materialblöcke nicht die ursprüngliche definierte Geometrie nach dem Tempern aufweisen, sondern in sich stark verzogen sind. In der Draufsicht ist gut zu erkennen, dass die Materialblöcke nicht mehr die ursprünglich kreisrunde Geometrie aufweisen. In Fig. 7c sind die inneren Risse, die sich bis auf die äußere Oberfläche erstrecken, zu erkennen.

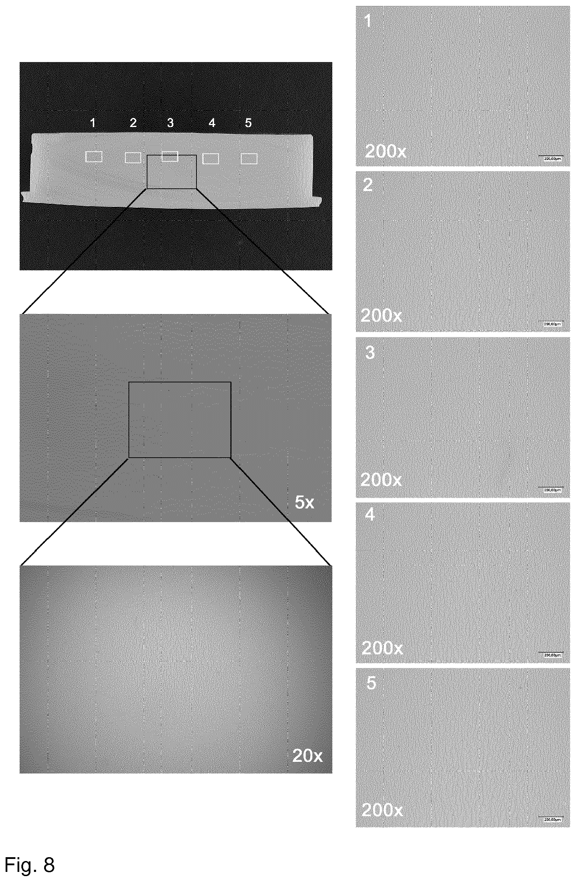

Figur 8 zeigt einen geschnittenen Materialblock sowie verschiedene Ausschnitte 1, 2, 3, 4 und 5 in 200facher Vergrößerung sowie einen grösseren Auschnitt mit 5facher und 20facher Vergrößerung. In den Abbbildungen 1 bis 5 ist der Massstab für 200 Mikrometer dargestellt. Die Vergrößerungen zeigen, dass der nach dem erfindungsgemässen Verfahren gehärtete Materialblock trotz seiner grossen Dimension von über 90 mm Breite keinerlei Verzüge oder gasförmige Einschlüsse oder Lunker zeigt, während die rein thermisch gehärteten Blöcke gleicher Abmesseungen in sich verzogen sind und grosse Risse und Lunker aufweisen.

### Beispiel:

Erfindungsgemäß wird die Aufgabe dadurch gelöst, dass das Komposit in eine bei der Wellenlänge des Photoinitiators lichtdurchlässige Form gegeben wird. Vorteilhafterweise wird das Komposit zuvor auf eine Temperatur aufgewärmt, bei der die Viskosität des Materials deutlich vermindert ist, um ein besseres Einfliessen in die Form zu ermöglichen. Die Temperatur darf dabei aber noch nicht so hoch sein, dass die thermisch induzierte Polymerisation startet. Dies ist abhängig vom verwendeten thermischen Polymerisationsstarter. Bei der Verwendung von z.B. Dibenzoylperoxid haben sich Maximal-Temperaturen von ca. 60 - 65 °C für einen Zeitraum von max. 2 Stunden als zweckmäßig herausgestellt.

Nach dem Einfliessen in die transparente Form und dem Planarisieren der Oberfläche durch vorsichtiges Pressen wird das Material in der Form für 6 Minuten allseitig in einer geeigneten Laborlichtlampe wie z.B. Eggerlichtofen bestrahlt und oberflächlich angehärtet. Nach diesem Vorhärte-Prozeß ist das Material von einer angehärteten "Haut" von ca. 5 mm überzogen, der Kern ist jedoch noch weich. Das formstabile lichtgehärtete Komposit-Material wird aus der PMMA-Form entnommen und anschliessend für ca. 8 Stunden in einen Trockenschrank bei ca. 90 °C gestellt, um die thermische Aushärtung und damit die Durchhärtung des Fräsblocks abzuschliessen.

UV/Vis: 380 nm bis 500 nm für 6 Minuten, bei 23°C RT; 5 Röhren Osram dulux S-Blue 71 blau 9W (450 nm) und 5 Röhren Osram dulux S-Blue 78 blau 9W (380 nm), insbesondere in einem innen verspiegeltem Lichtofen; Thermische Polymerisation: im vorgeheizten Ofen bei 90 °C für 8 Stunden. Das Abkühlen erfolgte in dem Ofen, der ausgeschaltet wird.

### Vergleich der Materialparameter

| | Prüfkörper hergestellt aus lichthärtender Paste | Prüfkörper gefräst aus erfindungsgemäß hergestelltem Fräsblock |
|---|---|---|
| | Charisma | Charisma + Peroxid |
| Biegefestigkeit [MPa] | 144 | 145 |
| E-Modul [MPa] | 9543 | 11747 |
| Härtung | 8 min. beidseitig Palatray CU | 6 min. Eggerlichtofen und 8 h 90°C Trockenschrank |

Die jeweiligen Prüfkörpergrößen entsprechen den Vorgaben der DIN 4049. Die Bestimmung der Biegefestigkeit [MPa] und des E-Modul [MPa] erfolgte nach der DIN 4049.

## Patentansprüche

1. Verfahren zur Herstellung eines dreidimensionalen dentalen Materialblocks aus einem dentalen, polymerisierbaren Material, wobei der Materialblock zur Herstellung von dentalen prothetischen Teilen in einem das Material abtragenden Verfahren geeignet ist, umfassend die Schritte
a) optional: Einstellen der Viskosität,
b)Überführen des polymerisierbaren dentalen Materials in eine strahlendurchlässige dreidimensionale Giess- oder Pressform,
c) optional: Planarisieren mindestens einer Oberfläche des dentalen Materials in der dreidimensionalen Giess- oder Pressform unter Ausbildung einer definierten dreidimensionalen Geometrie des Materials, und/oder
d) optional Anwendung von Druck auf das polymerisierbare Material in der dreidimensionalen Giess- oder Pressform,
e) Bestrahlen des polymerisierbaren dentalen Materials im Wesentlichen von allen Seiten mit Licht im UV/Vis-Bereich unter Ausbildung von polymerisierten äusseren Oberflächen des dentalen Materials in Form einer festen äusseren Hülle des dentalen Materials, wobei die Hülle in der definierten dreidimensionalen Geometrie des Materials vorliegt, während der innere Bereich des Materials nicht polymerisiert oder teilweise polymerisiert ist,
f) optional Entnehmen des dentalen Materials mit formstabiler Hülle mit definierter dreidimensionaler Geometrie aus der Giess- oder Pressform,
g) Erhitzen des Materials mit fester Hülle, die in definierter dreidimensionaler Geometrie vorliegt, auf 60 °C bis 150 °C für mindestens 90 Minuten,
h) optional: Abkühlen des vollständig polymerisierten Materials,
i) Erhalten eines dentalen, polymerisierten Materialblocks mit definierter dreidimensionaler Geometrie.

2. Verfahren nach Anspruch 1, **dadurch gekennzeichnet, dass**
I) die Bestrahlung des polymerisierbaren dentalen Materials im Wesentlichen von allen Seiten mit Licht im UV/Vis-Bereich für einen Zeitraum von 4 Minuten bis 4 Stunden erfolgt, und/oder
II) die Hülle im Schritt e) eine Dicke von 2 bis 15 mm aufweist, vorzugsweise von 2 bis 10 mm, besonders bevorzugt von 3 bis 6 mm, weiter bevorzugt von 3 bis 4 mm.

3. Verfahren nach Anspruch 1 oder 2, **dadurch gekennzeichnet, dass** die Bestrahlung des polymerisierbaren dentalen Materials als duale Bestrahlung mit Intensitätsmaxima des Lichts der Strahlungsquelle im UV- und im Vis-Bereich erfolgt, insbesondere erfolgt eine Bestrahlung mit Intensitätsmaxima der Strahlungsquelle von 350 nm bis 390 nm und von 420 bis 500 nm, vorzugsweise mit Intensitätsmaxima um 380 nm und 450 nm.

4. Verfahren nach einem der Ansprüche 1 bis 3, **dadurch gekennzeichnet, dass** das polymerisierbare dentale Material in Schritt b) in eine Strahlen durchlässige, dreidimensionale Giess- oder Pressform mit einer Hohlform überführt wird, wobei die Hohlform die Form eines Quaders aufweist, bei dem zwei Flächen grösser gleich DIN A5 (21 cm x 14,8 cm), insbesondere grösser gleich DIN A4 (21 cm x 29,7 cm), sind und die verbleibende Kantenlänge mindestens 20 mm beträgt, vorzugsweise ist die verbleibende Kantenlänge grösser gleich 30 mm, grösser gleich 40 mm, grösser gleich 50 mm, größer gleich 60 mm.

5. Verfahren nach einem der Ansprüche 1 bis 4, **dadurch gekennzeichnet, dass** in Schritt a) die Einstellung der Viskosität durch Erwärmen des Materials auf 60 bis 65 °C erfolgt.

6. Verfahren nach einem der Ansprüche 1 bis 5, **dadurch gekennzeichnet, dass** in Schritt c) das Planarisieren erfolgt, indem eine transparente Folie oder eine planare transparente Scheibe auf das zu polymerisierende Material in einer einseitig offenen dreidimensionalen Giess- oder Pressform aufgebracht wird, und die Folie oder die Scheibe anschließend mit einem Stempel unter Druck zur Planarisierung der Oberfläche beaufschlagt wird.

7. Verfahren nach einem der Ansprüche 1 bis 6, **dadurch gekennzeichnet, dass** in Schritt d) das polymerisierbare Material in der dreidimensionalen Giess- oder Pressform mit einem Druck von 1,5 bis 5 bar beaufschlagt wird.

8. Verfahren nach einem der Ansprüche 1 bis 7, **dadurch gekennzeichnet, dass** der polymerisierte Materialblock mit definierter dreidimensionaler Geometrie
a) mindestens eine erste Kantenlänge oder einen Durchmesser von größer gleich 90 mm und mindestens eine zweite Kantenlänge von größer gleich 20 mm aufweist, oder
b) in Form eines Quaders bei dem zwei Flächen grösser gleich DIN A5 sind vorliegt, insbesondere grösser gleich DIN A4, und die verbleibende Kantenlänge mindestens 20 mm beträgt, vorzugsweise grösser gleich 30 mm, grösser gleich 40 mm, 50 mm, grösser gleich 60 mm.

9. Verfahren nach einem der Ansprüche 1 bis 8, **dadurch gekennzeichnet, dass** die dreidimensionale Giess- oder Pressform aus Polymethylmethacrylat ist.

10. Verfahren nach einem der Ansprüche 1 bis 9, **dadurch gekennzeichnet, dass** der erhaltene dentale, polymerisierte Materialblock mit definierter dreidimensionaler Geometrie in grösser gleich 50 Fräsblöcke die mindestens eine Kantenlängen von grösser gleich 10 mm aufweisen zerteilt wird.

11. Dentaler Materialblock erhältlich nach einem Verfahren nach einem der Ansprüche 1 bis 9, wobei der Materialblock ein Quader mit zwei Flächen grösser gleich DIN A5 (21 cm × 14,8 cm) oder grösser gleich DIN A4 (21 cm × 29,7 cm) ist und die verbleidende Kantenlänge größer gleich 20 mm beträgt.

12. Materialblock nach Anspruch 11, **dadurch gekennzeichnet, dass** der Materialblock keine Lunker, Risse oder Hohlräume aufweist, die in einer Dimension eine Ausdehnung von grösser gleich 0,05 mm aufweisen.

13. Materialblock nach einem der Ansprüche 11 oder 12, **dadurch gekennzeichnet, dass** dieser einen Volumenschrumpf von kleiner gleich 1 bis 3 Vol.-% in Bezug auf zumindest eine Kantenlänge der Hohlform der Giess- oder Pressform aufweist.

14. Verwendung eines polymerisierten Materialblocks erhältlich nach einem der Ansprüche 1 bis 10 oder nach einem der Ansprüche 11 bis 13, der mindestens eine Kantenlänge oder einen Durchmesser von grösser gleich 90 mm und mindestens eine zweite Kantenlänge von grösser gleich 20 mm aufweist zur Herstellung von mindestens zwei kleineren Materialblöcken, insbesondere indem der Materialblock mindestens einmal zerteilt wird.

## Claims

1. Method for the production of a three-dimensional dental block of material from a dental, polymerisable material, wherein the block of material is suitable for the production of dental prosthetic parts in a material-removing process, comprising the steps of
a) optionally: setting the viscosity,
b) transferring the polymerisable dental material into a radiolucent three-dimensional casting or press mould,
c) optionally: planarising at least one surface of the dental material in the three-dimensional casting or press mould forming a defined three-dimensional geometry of the material, and/or
d) optionally application of pressure to the polymerisable material in the three-dimensional casting or press mould,
e) irradiating the polymerisable dental material substantially from all sides with light in the UV/Vis spectral region forming polymerised outer surfaces of the dental material in the form of a solid outer shell of the dental material, wherein the shell is present in the defined three-dimensional geometry of the material whilst the inner region of the material is not polymerised or partially polymerised,
f) optionally removing the dental material with dimensionally stable shell having defined three-dimensional geometry from the casting or press mould,
g) heating the material with solid shell being present in defined three-dimensional geometry, to 60 °C to 150 °C for at least 90 minutes,
h) optionally: cooling the completely polymerised material,
i) obtaining a dental, polymerised block of material having defined three-dimensional geometry.

2. Method according to claim 1, **characterised in that**
I) the irradiation of the polymerisable dental material is made substantially from all sides with light in the UV/Vis spectral region for a period of 4 minutes to 4 hours, and/or
II) the shell in step e) has a thickness of greater than or equal to 2 to 15 mm, preferably of greater than or equal to 2 to 10 mm, particularly preferably of 3 to 6 mm, more preferably of 3 to 4 mm.

3. Method according to claim 1 or 2, **characterised in that**
the irradiation of the polymerisable dental material is made as dual irradiation with intensity maxima of the light of the radiation source in the UV and Vis spectral region, in particular an irradiation is made with intensity maxima of the radiation source of 350 nm to 390 nm and of 420 to 500 nm, preferably with intensity maxima about 380 nm and 450 nm.

4. Method according to any one of the claims 1 to 3, **characterised in that** the polymerisable dental material in step b) is transferred into a radiolucent, three-dimensional casting or press mould having a hollow mould, wherein the hollow mould has the form of a cuboid, in which two faces are greater than or equal to DIN A5 (21 cm x 14.8 cm), in particular greater than or equal to DIN A4 (21 cm x 29.7 cm), and the remaining edge length amounts to at least 20 mm, preferably the remaining edge length is greater than or equal to 30 mm, greater than or equal to 40 mm, greater than or equal to 50 mm, greater than or equal to 60 mm.

5. Method according to any one of the claims 1 to 4, **characterised in that** in step a) the setting of the viscosity is made by heating the material to 60 to 65 °C.

6. Method according to any one of the claims 1 to 5, **characterised in that** in step c) the planarising is made by depositing a transparent foil or a planar transparent pane onto the material to be polymerised in a one-side open three-dimensional casting or press mould, and the foil or the pane is subsequently applied with a stamp under pressure for planarising of the surface.

7. Method according to any one of the claims 1 to 6, **characterised in that** in step d) the polymerisable material in the three-dimensional casting or press mould is applied with a pressure of 1.5 to 5 bar.

8. Method according to any one of the claims 1 to 7, **characterised in that** the polymerised block of material having defined three-dimensional geometry
a) has at least one first edge length or a diameter of greater than or equal to 90 mm and at least a second edge length of greater than or equal to 20 mm, or
b) has the form of a cuboid in which two faces are greater than or equal to DIN A5, in particular greater than or equal to DIN A4, and the remaining edge length amounts to at least 20 mm, preferably greater than or equal to 30 mm, greater than or equal to 40 mm, 50 mm, greater than or equal to 60 mm.

9. Method according to any one of the claims 1 to 8, **characterised in that** the three-dimensional casting or press mould is made of polymethylmethacrylate.

10. Method according to any one of the claims 1 to 9, **characterised in that** the dental, polymerised block of material obtained having defined three-dimensional geometry is divided into greater than or equal to 50 milling blocks having at least one edge length of greater than or equal to 10 mm.

11. Dental block of material obtainable according to a method according to any one of the claims 1 to 9, wherein the polymerized block is a cuboid in which tow face are greater than or equal to DIN A5 (21 × 14,8 cm) or greater than or equal to DIN A4 (21 cm × 29,7 cm) and the remaining edge length amounts to at least 20 mm.

12. Block of material according to claim 11, **characterised in that** the block of material does not have any blowholes, cracks or cavities having an extent in one dimension of greater than or equal to 0.05 mm.

13. Block of material according to any one of the claims 11 to 12, **characterised in that** it has a volume shrinkage of less than or equal to 1-3 % by volume, based on at least on edge length of the hollow mould casting or press mould.

14. Use of a polymerised block of material obtainable according to any one of the claims 1 to 11 or according to any one of the claims 10 to 13, having at least one edge length or a diameter of greater than or equal to 90 mm and at least one second edge length of greater than or equal to 20 mm for the production of at least two smaller blocks of material, in particular by dividing the block of material at least once.

## Revendications

1. Procédé de fabrication d'un bloc de matériau dentaire tridimensionnel à partir d'un matériau dentaire polymérisable, le bloc de matériau étant adapté à la fabrication de pièces prothétiques dentaires dans un procédé d'enlèvement de matériau, comprenant les étapes suivantes :
a) en option : ajustement de la viscosité,
b)transfert du matériau dentaire polymérisable dans un moule de coulée ou de compression tridimensionnel et radio-transparent,
c) en option : planarisation d'au moins une surface du matériau dentaire dans le moule de coulée ou de compression tridimensionnel par la formation d'une géométrie tridimensionnelle définie du matériau, et/ou
d) en option, application d'une pression sur le matériau polymérisable dans le moule de coulée ou de compression tridimensionnel,
e) irradiation du matériau dentaire polymérisable, réalisée essentiellement de tous les côtés avec une lumière dans la région UV/Vis avec formation de surfaces extérieures polymérisées du matériau dentaire sous forme d'une enveloppe extérieure solide du matériau dentaire, l'enveloppe étant présente dans la géométrie tridimensionnelle définie du matériau, tandis que la zone intérieure du matériau n'est pas ou est partiellement polymérisée,
f) en option, retrait du matériau dentaire avec une enveloppe indéformable à géométrie tridimensionnelle définie du moule de coulée ou de compression,
g) chauffage du matériau avec enveloppe solide, dont la géométrie tridimensionnelle est définie, à une température comprise entre 60 °C et 150 °C pendant au moins 90 minutes,
h) en option : refroidissement du matériau entièrement polymérisé,
i) obtention d'un bloc de matériau dentaire polymérisé avec une géométrie tridimensionnelle définie.

2. Procédé selon la revendication 1, **caractérisé en ce que**
I) l'irradiation du matériau dentaire polymérisable est réalisée essentiellement de tous les côtés avec une lumière dans la région UV/Vis pendant une durée de 4 minutes à 4 heures, et/ou
II) l'enveloppe à l'étape e) présente une épaisseur de 2 à 15 mm, préférablement de 2 à 10 mm, particulièrement préférablement de 3 à 6 mm, plus préférablement de 3 à 4 mm.

3. Procédé selon la revendication 1 ou 2, **caractérisé en ce que** l'irradiation du matériau dentaire polymérisable est réalisée sous forme d'une double irradiation avec des maxima d'intensité de la lumière de la source de rayonnement dans les régions UV et Vis, en particulier une irradiation s'opère avec des maxima d'intensité de la source de rayonnement de 350 nm à 390 nm et de 420 à 500 nm, préférablement avec des maxima d'intensité autour de 380 nm et 450 nm.

4. Procédé selon l'une des revendications 1 à 3, **caractérisé en ce que** le matériau dentaire polymérisable dans l'étape b) est transféré dans un moule de coulée ou de compression tridimensionnel, radio-transparent, avec une forme creuse, la forme creuse ayant la forme d'un parallélépipède dans lequel deux surfaces sont supérieures ou égales à DIN A5 (21 cm x 14,8 cm), en particulier supérieures ou égales à DIN A4 (21 cm x 29,7 cm) et la longueur d'arête restante est d'au moins 20 mm, de préférence supérieure ou égale à 30 mm, supérieure ou égale à 40 mm, supérieure ou égale à 50 mm, supérieure ou égale à 60 mm.

5. Procédé selon l'une des revendications 1 à 4, **caractérisé en ce que**, à l'étape a), l'ajustement de la viscosité est effectué par chauffage du matériau à une température comprise entre 60 et 65°C.

6. Procédé selon l'une des revendications 1 à 5, **caractérisé en ce que**,
dans l'étape c), la planarisation s'effectue en appliquant une feuille transparente ou un disque transparent planaire sur le matériau à polymériser dans un moule de coulée ou de compression tridimensionnel ouvert d'un côté et la feuille ou le disque est ensuite soumis à un poinçon sous pression pour planariser la surface.

7. Procédé selon l'une des revendications 1 à 6, **caractérisé en ce que**,
dans l'étape d), le matériau polymérisable est soumis à une pression de 1,5 à 5 bars dans le moule de coulée ou de compression tridimensionnel.

8. Procédé selon l'une des revendications 1 à 7, **caractérisé en ce que** le bloc de matériau polymérisé à géométrie tridimensionnelle définie
a) présente au moins une première longueur d'arête ou un diamètre supérieur ou égal à 90 mm et au moins une deuxième longueur d'arête supérieure ou égale à 20 mm ou
b) présente la forme d'un parallélépipède dans lequel deux surfaces supérieures ou égales à DIN A5 sont présentes, en particulier supérieures ou égales à DIN A4 et la longueur d'arête restante est d'au moins 20 mm, de préférence supérieure ou égale à 30 mm, supérieure ou égale à 40 mm, 50 mm, supérieure ou égale à 60 mm.

9. Procédé selon l'une des revendications 1 à 8, **caractérisé en ce que**
le moule de coulée ou de compression tridimensionnel est en polyméthacrylate de méthyle.

10. Procédé selon l'une des revendications 1 à 9, **caractérisé en ce que** le bloc de matériau dentaire polymérisé obtenu, avec une géométrie tridimensionnelle définie, est divisé en 50 blocs de fraisage ou plus, présentant au moins une longueur d'arête supérieure ou égale à 10 mm.

11. Bloc de matériau dentaire pouvant être obtenu par un procédé selon l'une des revendications 1 à 9, le bloc de matériau étant un parallélépipède avec deux surfaces supérieures ou égales à DIN A5 (21 cm × 14,8 cm) ou supérieures ou égales à DIN A4 (21 cm × 29,7 cm) et la longueur d'arête restante étant supérieure ou égale à 20 mm.

12. Bloc de matériau selon la revendication 11, **caractérisé en ce que** le bloc de matériau ne présente pas de soufflures, de fissures ou de cavités qui ont, dans une dimension, une extension supérieure ou égale à 0,05 mm.

13. Bloc de matériau selon l'une des revendications 11 ou 12, **caractérisé en ce qu'**il présente une réduction de volume inférieure ou égale à 1 à 3 % en volume par rapport à au moins une longueur d'arête de la forme creuse du moule de coulée ou de compression.

14. Utilisation d'un bloc de matériau polymérisé pouvant être obtenu selon l'une des revendications 1 à 10 ou selon l'une des revendications 11 à 13, présentant au moins une longueur d'arête ou un diamètre supérieur ou égal à 90 mm et au moins une deuxième longueur d'arête supérieure ou égale à 20 mm, pour la fabrication d'au moins deux blocs de matériau plus petits, notamment en découpant le bloc de matériau au moins une fois.
